# FASCICULE DE BREVET EUROPEEN

(11) **EP 4 118 310 B1**
(45) Date de publication et mention de la délivrance du brevet: **12.06.2024**
(21) Numéro de dépôt: 21732389.8
(22) Date de dépôt: 21.04.2021
(51) Int. Cl.: F01P 3/08, F01M 1/08, F16N 23/00

(54) **GICLEUR DE REFROIDISSEMENT DE PISTON DOUBLE JET EN MATÉRIAU PLASTIQUE**
DOPPELSTRAHL-KOLBENKÜHLUNGSDÜSE AUS KUNSTSTOFF
TWIN-JET PISTON COOLING NOZZLE MADE OF PLASTIC MATERIAL

(30) Priorité: 22.04.2020 FR 2003997
(43) Date de publication de la demande: 18.01.2023
(73) Titulaire: Bontaz Centre, 74460 Marnaz (FR)
(72) Inventeur: PEROTTO, Stéphane Pascal, 74130 AYSE (FR); SIXT, Julien, 74600 SEYNOD (FR); SORIN, Maxime, 74300 CLUSES (FR)
(74) Mandataire: Brevalex
(86) Numéro de dépôt international: PCT/FR2021/050692
(87) Numéro de publication internationale: WO 2021/214411

(56) Documents cités:
- EP-A1- 0 423 830
- EP-A1- 3 415 736
- WO-A1-2018/164878
- KR-A- 20040 041 430
- US-A1- 2010 095 910

## Description

La présente invention se rapporte au domaine des gicleurs de fluide en particulier dans un dispositif de refroidissement pour moteur et prévoit un gicleur amélioré ainsi qu'un procédé de fabrication d'un tel gicleur.

Un gicleur de refroidissement de piston d'un moteur à combustion interne permet de projeter un fluide de refroidissement tel que de l'huile sur au moins une zone appropriée d'un piston.

Les gicleurs de refroidissement de pistons sont habituellement formés par des pièces rapportées fixées sur un carter moteur et communiquant avec un orifice d'amenée de fluide de refroidissement. La position du gicleur est déterminée avec précision pour réaliser un jet de fluide de refroidissement dirigée vers une zone précise du fond du piston ou vers une entrée de galerie de pistons.

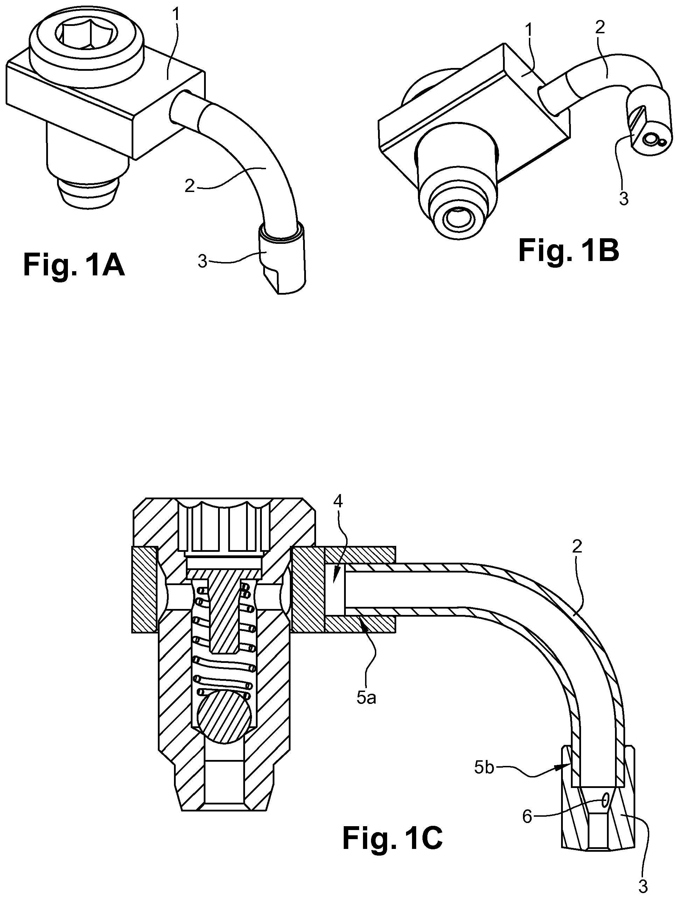

Un gicleur de refroidissement de piston tel que mis en oeuvre par la demanderesse est illustré sur les figures 1A, 1B, 1C (donnant une vue de la pièce selon deux plans de coupes distincts et parallèles).

Il est composé d'un corps 1 d'alimentation métallique creux ainsi que d'un tube 2 métallique, typiquement en acier, s'emboitant dans le corps 1 creux et communicant avec un passage 4 de fluide pratiqué dans le corps 1 creux. Le tube 2 peut être terminé par un embout 3 métallique. L'embout 3 possède des perçages 6 pour permettre la sortie d'huile.

Le corps 1 d'alimentation, le tube 2 et l'embout 3 sont typiquement en acier ce qui peut les rendre difficiles à usiner et peut poser des problèmes de poids.

Typiquement, le tube 2 est assemblé au corps creux 1 par le biais d'un brasage. L'embout 3 est également emmanché et assemblé au tube 2 métallique par brasage.

La répétabilité de l'assemblage afin de garantir une uniformité de dimensions et de fonctionnement du gicleur pose des difficultés. Par ailleurs, l'assemblage par brasage peut s'avérer onéreux.

Il se pose le problème de réaliser une nouvelle structure de gicleur améliorée vis-à-vis d'au moins un des inconvénients mentionnés ci-dessus.

Le document KR20040041430A divulgue un élément de gicleur selon le préambule de la revendication 1.

### EXPOSÉ DE L'INVENTION

La revendication 1 définit un élément de gicleur de fluide selon l'invention.

Une telle pièce a un poids et un coût réduits en comparaison d'un gicleur mécano-soudé. Elle permet de réduire le nombre de composants à assembler pour réaliser ce gicleur.

La réalisation du corps d'alimentation et de la structure de conduit en un seul bloc de matériau plastique permet d'obtenir un dimensionnement précis de la pièce ainsi qu'un positionnement précis des orifices d'évacuation fluide dans la pièce, en particulier par rapport à un gicleur dans lequel l'évacuation est assurée par un embout assemblé et brasé sur un tube dont on doit contrôler la bonne orientation.

Typiquement, le gicleur de fluide est un gicleur de fluide de refroidissement d'un moteur, en particulier un moteur à combustion interne.

Avantageusement, le gicleur peut comprendre en outre au moins un organe de fixation configuré pour fixer ledit corps d'alimentation à un dispositif d'alimentation en fluide.

Le gicleur peut être pourvu d'un élément de régulation d'accès de fluide dans ladite structure de conduit tel qu'une vanne et/ou un clapet.

De manière particulièrement avantageuse, l'organe de fixation et l'élément de régulation sont réalisés par une vis clapet logée dans ledit passage axial.

Selon un mode de réalisation particulier, entre la vis clapet et ledit corps d'alimentation, on prévoit un insert métallique logé dans ledit passage axial, ledit insert métallique comportant une surface externe s'appuyant contre une paroi interne dudit corps d'alimentation, ledit insert métallique étant pourvu d'un trou latéral traversant et communicant avec ladite ouverture transversale.

Selon un mode de réalisation avantageux, l'insert métallique peut être muni d'une structure de positionnement, en particulier un méplat, configuré pour être placé sur un élément de positionnement d'une paroi interne du corps d'alimentation. L'élément de positionnement peut être semblable à la structure de positionnement de l'insert ou complémentaire de la structure de positionnement de l'insert.

Selon l'invention, le gicleur est muni d'une plaque de fixation en un matériau métallique et/ou de rigidité supérieure audit matériau plastique, ladite plaque de fixation étant agencée sur ladite face de fixation dudit corps d'alimentation.

Un organe de fixation, par exemple une vis creuse ou une vis clapet dotée d'un épaulement peut être utilisée. Avantageusement, cet épaulement est configuré pour venir en butée contre la plaque de fixation.

Selon une possibilité de réalisation du gicleur, ce dernier peut être doté en outre : d'un joint intercalé entre une tête de ladite vis clapet ou de la vis creuse et ladite face d'appui dudit corps d'alimentation.

La structure de conduit peut être dotée d'un canal fluidique ayant une extrémité communicant avec ladite ouverture transversale et une autre extrémité communicant avec plusieurs orifices d'évacuation de fluide ayant des orientations différentes.

La réalisation de la structure de conduit en matériau plastique permet de réaliser aisément différents formes d'orifices, ce qui peut apporter un gain de performances du jet de fluide, en particulier un meilleur débit utile et une meilleure précision de projection.

Avantageusement, lesdits un ou plusieurs orifices d'évacuation de fluide ont une section transversale en forme de polygone ou une section en forme d'une succession de portions courbes réalisant un contour fermé.

Selon un autre aspect, la présente invention concerne un dispositif de refroidissement de piston d'un moteur à combustion interne comprenant un gicleur de fluide tel que défini précédemment.

Selon un autre aspect, la présente invention concerne un moteur à combustion interne comportant :
- un bloc moteur et des pistons montés coulissants dans ledit bloc moteur,
- un dispositif de refroidissement tel que défini plus haut.

Selon un autre aspect, la présente invention concerne un procédé de fabrication d'un élément de gicleur de fluide tel que défini plus haut, le procédé comprenant une étape de moulage dudit bloc de matériau plastique et/ou polymère, en particulier un moulage par injection.

Un tel procédé permet de fabriquer rapidement le gicleur avec une bonne répétabilité dimensionnelle de la pièce formant corps d'alimentation et conduit, permet de limiter le nombre d'opérations d'assemblage comparé à un gicleur mécano-soudé, et permet de réaliser des formes des sorties de fluides plus complexes que dans une pièce métallique.

Selon un mode de réalisation particulier, le moulage peut être effectué de sorte à surmouler ledit bloc plastique sur une plaque métallique sur la ladite face de fixation.

Selon un aspect avantageux du procédé le moule utilisé lors de l'étape de moulage est pourvu d'une tige et d'une ou plusieurs broches de formes respectives complémentaires respectivement d'orifices d'évacuation et d'un canal dans la structure de conduit.

Selon un autre aspect, la présente invention concerne un procédé de fabrication d'un gicleur de fluide tel que défini plus haut.

### BRÈVE DESCRIPTION DES DESSINS

La présente invention sera mieux comprise à l'aide de la description qui va suivre et des dessins en annexe sur lesquels :
Les figures 1A, 1B, 1C donnent des vues en perspective et en coupe d'un gicleur métallique conventionnel formé par assemblage de pièces métalliques par brasure ;
Les figures 2A, 2B donnent une vue en perspective et une vue de dessous d'une pièce en matériau plastique formant corps d'alimentation et conduit d'évacuation d'un gicleur selon un exemple ne faisant pas partie de l'invention;
La figure 3 est une vue en coupe d'un assemblage de la pièce plastique et d'une vis, selon un exemple ne faisant pas partie de l'invention;
Les figures 4A, 4B donnent une vue en perspective et une vue de dessous d'un exemple de réalisation particulier du gicleur dans lequel un insert métallique est monté sur la pièce en matériau plastique, selon un exemple ne faisant pas partie de l'invention;
La figure 4C donnent une vue en perspective de l'insert métallique ;
La figure 5 est une vue en perspective d'un exemple de réalisation particulier d'un gicleur selon l'invention, dans lequel un joint d'étanchéité est prévu entre la tête d'un organe de fixation et une face de la pièce en matériau plastique ;
Les figures 6A, 6B donnent respectivement une vue en coupe d'un exemple de réalisation d'un gicleur selon l'invention, dans lequel la pièce plastique est surmoulée sur une plaque de fixation rigide, et une vue en perspective de la plaque de fixation seule ;
Les figures 7A, 7B, 7C, 7D, 7E donnent différentes formes d'orifices d'évacuation de fluide prévus dans la pièce plastique formant corps d'alimentation et conduit d'évacuation d'un gicleur ;
La figure 8 donne une vue d'un dispositif pour le moulage de la pièce plastique de gicleur.

Les différentes parties représentées sur les figures ne le sont pas nécessairement selon une échelle uniforme, pour rendre les figures plus lisibles.

En outre, dans la description ci-après, des termes qui dépendent de l'orientation d'une structure tels que « avant », « supérieure », « arrière », « inférieure », « latérale », s'appliquent en considérant que la structure est orientée de la façon illustrée sur les figures.

### EXPOSÉ DÉTAILLÉ DE MODES DE RÉALISATION PARTICULIERS

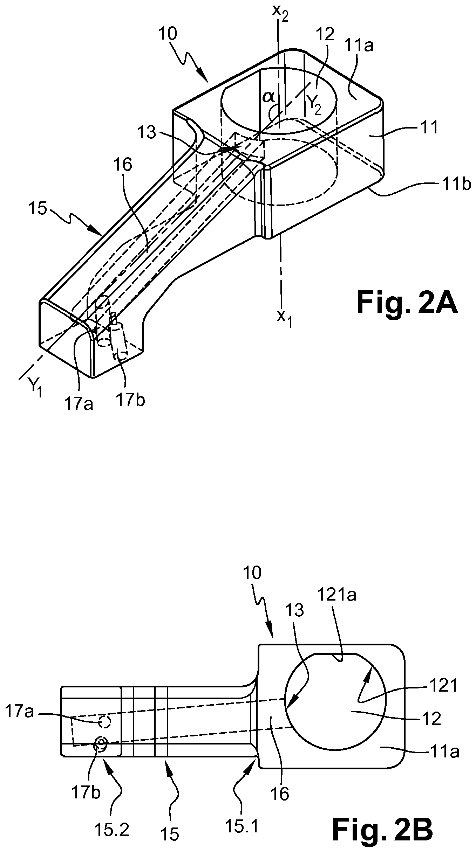

Sur les figures 2A-2B (donnant respectivement une vue en 3 dimensions et une vue de dessous), on peut voir un exemple ne faisant pas partie de la présente invention.

Le gicleur peut être en particulier un gicleur de fluide de refroidissement tel que de l'huile et destiné à projeter ce fluide sur une ou plusieurs zones de piston d'un moteur à combustion.

La pièce 10 comporte une partie 11, dans cet exemple de forme parallélépipédique, appelée « corps d'alimentation », destinée à être connectée à un dispositif d'alimentation en fluide (non représenté). Une face 11b dite « de fixation » peut être ainsi amenée à être rapportée contre ce dispositif d'alimentation en fluide, par exemple contre un carter de moteur destiné à transmettre le fluide de refroidissement.

Le corps d'alimentation 11 est creux et comporte un passage axial 12 interne qui s'étend ici de la face 11b de fixation à une face dite « d'appui » 11a opposée à la face de fixation 11a. Le passage axial 12 délimité par au moins une paroi interne 121 du corps d'alimentation 10 communique avec une ouverture transversale 13 pratiquée dans cette paroi interne 121. Le fluide est amené à pénétrer dans la pièce 10 du côté de la face de fixation 11b du corps d'alimentation 11, traverser le passage 12 axial, puis traverser l'ouverture transversale 13.

La pièce 10 est dotée d'une autre partie 15, de forme allongée ou oblongue, appelée « structure de conduit », qui est reliée par une première extrémité 15.1 au corps d'alimentation et s'étend depuis une face latérale du corps d'alimentation jusqu'à une extrémité libre 15.2 formant une extrémité d'évacuation de fluide. Le fluide est évacué par le biais d'au moins un orifice d'évacuation de fluide prévue dans l'extrémité libre 15.2 de la structure de conduit.

La pièce 10 a la particularité d'être mono-bloc, autrement dit avec une structure de conduit et un corps d'alimentation formés en un seul bloc. Une réalisation mono-bloc constitue des avantages en termes de répétabilité dimensionnelles et fonctionnelles par rapport à un gicleur résultant d'un assemblage de plusieurs éléments généralement d'un corps d'alimentation et d'un tube fluidique auxquels peut s'ajouter un embout d'évacuation.

La pièce 10 est typiquement à base d'au moins un matériau plastique ou à base d'au moins un matériau polymère, ce qui la rend économique, permet également de conférer un gain de poids et facilite une réalisation en une seule opération, par exemple par moulage. Un polymère chargé en fibres de verre ou en renforts peut être également utilisé.

De préférence, le matériau plastique est choisi de sorte à résister à des cycles thermiques entre -40°C et 140°C. Le matériau plastique peut être par exemple, un polyamide tel que du PA66 ou du PA6-6T, un polyphtalamide (PPA), un Polyphénylène Sulfide (PPS).

Un autre critère de choix est sa compatibilité avec le fluide utilisé. Par exemple lorsque ce fluide est une huile de refroidissement on choisit un matériau plastique résistant chimiquement à cette huile.

Une pièce 10 plastique multi-matières et dotée par exemple d'une zone de matériau plastique plus souple qu'une autre zone en un matériau plastique différent peut être également prévue.

Avec une pièce 10 mono-bloc en plastique, on évite par ailleurs une ou plusieurs opérations de brasures comme lorsqu'on réalise un gicleur suivant l'art antérieur par assemblage entre un corps d'alimentation, un tube fluidique, et éventuellement un embout d'évacuation.

Avantageusement, un matériau plastique souple peut être utilisé, afin d'obtenir une meilleure endurance de la pièce 10. Dans ce cas, le matériau peut être un polymère sans charge en fibre de verre.

Dans l'exemple illustré, la structure de conduit 15 comporte un canal 16 qui communique avec l'ouverture transversale 13 et débouche sur plusieurs orifices 17a, 17b d'évacuation de fluide. Après avoir traversé le corps d'alimentation 11 et l'ouverture transversale 13, le fluide est amené à traverser le canal puis est évacué de la pièce 10 par les orifices 17a, 17b.

Selon une possibilité de réalisation montrée sur la figure 2A, la structure de conduit peut être pourvue d'un canal 16 rectiligne qui s'étend dans une direction Y1Y2 réalisant un angle α différent de 90°, par exemple supérieur à 90° par rapport à l'axe X1X2 principal du passage 12. L'axe X1X2 est dans cet exemple particulier normal à la face 11b de fixation.

Les orifices 17a, 17b ont avantageusement des orientations différentes l'une par rapport à l'autre et par rapport au canal 16. Cela permet d'évacuer le fluide vers des cibles distinctes. Par exemple, dans le cas d'un gicleur de liquide de refroidissement, cela permet de refroidir des zones différentes d'un mécanisme de piston. Le gicleur de refroidissement de piston peut être conçu par exemple pour remplir deux fonctions, le refroidissement du piston par une galerie de piston et la lubrification d'un axe piston/bielle.

L'utilisation de matériau plastique pour réaliser la pièce 10 offre par ailleurs la possibilité de prévoir aisément différentes configurations et formes d'orifices 17a, 17b d'évacuation et/ou de canal 16.

Un organe de fixation (non représentée sur les figures 2A-2B) est destiné à être inséré dans le passage axial 12. Cet organe de fixation, par exemple formé d'une vis creuse ou d'une vis clapet est typiquement configuré pour fixer le corps d'alimentation 11 au dispositif d'alimentation en fluide (non représenté) tout en permettant une circulation de fluide du passage 12 axial vers l'ouverture 13 transversale. L'organe de fixation peut être prévu en particulier pour maintenir la face de fixation 11b de la pièce 10 contre le dispositif d'alimentation en fluide (non représenté) ou un support lui-même disposé contre le dispositif d'alimentation en fluide.

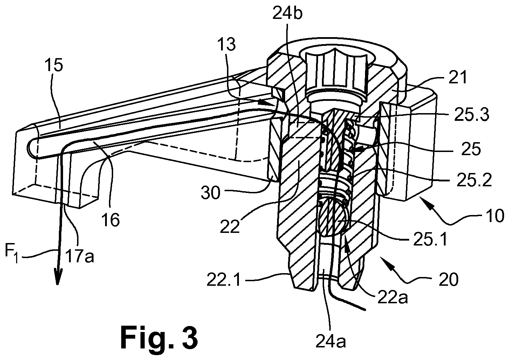

Dans l'exemple ne faisant pas partie de l'invention illustré sur la figure 3, l'organe de fixation est une vis 20 creuse comportant une tête 21 agencée contre et ici en contact avec la face d'appui 11b de la pièce 10. La vis 20 comporte une tige 22 filetée creuse dans le prolongement de la tête 21 et qui est logée dans le passage axial 12. La tige creuse 22 comporte une partie 22.1 qui dépasse de la face de fixation 11b. Cette partie 22.1 peut être par exemple destinée à s'engager dans un alésage du dispositif d'alimentation en fluide, par exemple d'une canalisation ou de carter d'huile d'un bloc moteur. Cette partie 22.1 est optionnelle.

Pour permettre le passage de fluide, au moins une cavité axiale 24a s'étendant dans la tige 22 débouche à une extrémité sur le dispositif d'alimentation en fluide. Dans le prolongement de la cavité axiale 24a, la tige 22 de la vis 20 comporte une cavité 24b radiale susceptible d'être mise en communication avec l'ouverture transversale 13 de la pièce 10.

Dans l'exemple de la figure 3, on utilise avantageusement une vis 20 clapet qui assure en outre une fonction de régulation de l'accès de fluide dans la structure de conduit 15 de la pièce 10. Un clapet d'obturation 25 sensible à la pression et configuré pour, en fonction de la pression de fluide, alternativement bloquer l'accès de fluide vers la structure de conduit 15 de la pièce 10 et permettre l'accès de fluide vers la structure de conduit 15 de la pièce 10 est ici prévu dans la partie creuse de la vis 20.

Dans l'exemple particulier illustré sur la figure 3, le clapet 25 peut être formé d'au moins un élément d'obturation 25.1 par exemple sous forme d'une bille apte à obturer une section de la cavité axiale 22a. L'élément d'obturation 25.1 est agencé contre un ressort 25.2 s'appuyant contre un capot 25.3 et est prévu pour obturer une autre section de la cavité axiale 22a et bloquer un passage de fluide vers l'ouverture transversale 13 de la pièce 10, en particulier tant que la pression de fluide est inférieure à un seuil de pression donné. D'autres types de vis clapet, par exemple une vis clapet comportant un piston comme élément d'obturation peuvent également être utilisées.

Le fonctionnement du gicleur peut être alors le suivant : sous une certaine pression de fluide, par exemple lorsqu'une pression d'huile moteur dépasse un seuil donné, un déplacement de la bille 25.1 vient entraîner un passage du clapet dans une position d'ouverture. Le fluide sort par la cavité radiale 24b elle-même communicant avec l'ouverture 13 transversale de la pièce 10 pour se diriger vers le canal 16 principal de cette pièce 10 et débouche enfin par les orifices de sortie 17a, 17b présents en extrémité libre 15.2 de la structure de conduit 15.

Bien que la figure 3 montre une position de fermeture du clapet empêchant une circulation de fluide dans la structure de conduit 15, le parcours du fluide adopté lorsque ce clapet se trouve en position ouverte est représenté de manière schématique par le biais d'une flèche F₁.

En variante de l'exemple illustré sur la figure 3, on peut prévoir de réaliser le gicleur avec un organe de fixation de type vis creuse à l'intérieur de laquelle le fluide est destinée à passer, sans nécessairement prévoir d'élément d'obturation ou de clapet intégré. Dans ce cas, le contrôle d'arrivée de fluide dans la structure de conduit 15 peut être déporté hors de la pièce 10 par le biais d'une autre structure, par exemple d'une électrovanne extérieure à la vis et à la pièce 10. On peut également prévoir, pour certaines applications, un gicleur sans moyen d'obturation apte à empêcher une circulation de fluide d'un dispositif d'alimentation en fluide vers la structure de conduit 15.

Pour améliorer la fixation de la pièce 10 en matériau plastique par l'organe de fixation au moins en partie métallique, on peut prévoir un insert métallique 30, par exemple en acier dans le passage 12 contre la paroi interne 12.1, et que l'on prévoit d'agencer entre cette paroi interne 121 et l'organe de fixation. L'insert 30 permet également de garantir le centrage de la tête de vis et de garantir un bon positionnement du gicleur.

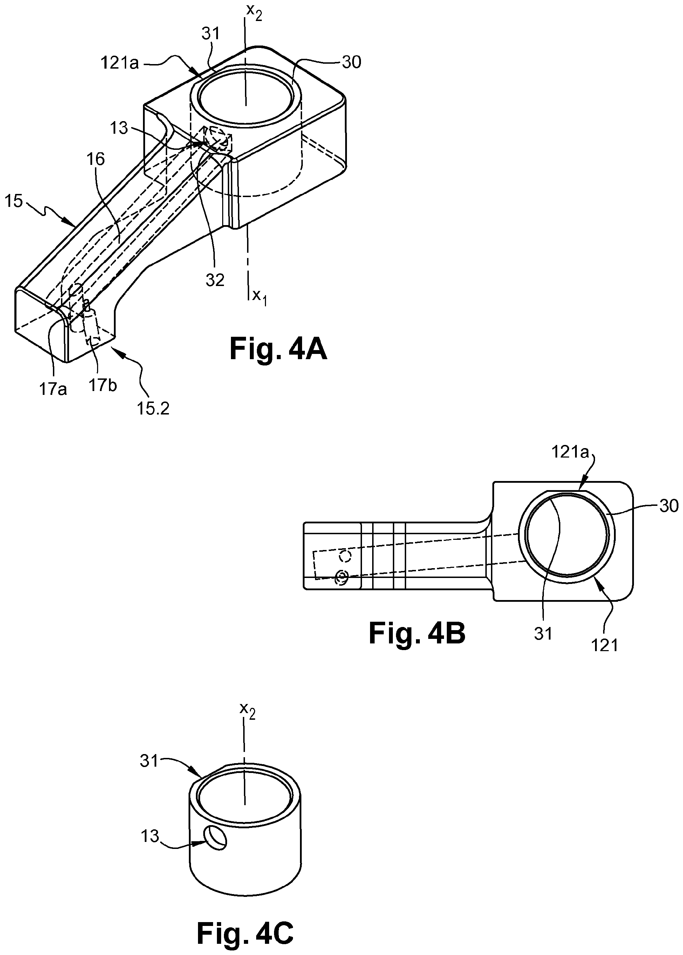

Sur les figures 4A-4B, donnant respectivement une vue en 3 dimensions et une vue de dessous de la pièce 10 sans organe de fixation, on peut voir l'insert métallique 30 logé dans ledit passage axial 12. L'insert a dans cet exemple un aspect de tube cylindrique. Pour permettre le passage de fluide vers canal 16, l'insert métallique 30 logé dans ledit passage axial comporte un trou latéral 32 traversant sa paroi et communicant avec ladite ouverture transversale 13. Pour garantir une bonne orientation du trou latéral 32 d'insert avec l'ouverture transversale 13 aboutissant au canal 16, une structure de positionnement peut être prévue sur l'insert 30. La structure de positionnement peut être amenée à être agencé sur un élément de positionnement de la paroi interne 121 du corps d'alimentation 11. Dans l'exemple illustré, la structure de positionnement est un méplat 31 agencé contre un méplat correspondant 121a ou une zone plane 121a correspondante de la paroi interne 121 du corps d'alimentation 11. Le méplat constitue un moyen simple à réaliser pour garantir l'orientation du trou 32 par rapport à l'ouverture transversale 13 et assure ainsi que le trou 32 et l'ouverture transversale 13 communiquent pleinement pour garantir le passage de fluide dans une zone de diamètre contrôlé. On peut en variante prévoir d'autres moyens pour permettre d'empêcher une rotation tels qu'une rainure selon un axe parallèle à l'axe X1X2 ou une section en hexagone.

L'insert 30, que l'on peut voir de manière isolée sur la figure 4C, est typiquement assemblé avec force dans le passage 12 du corps 11 en plastique.

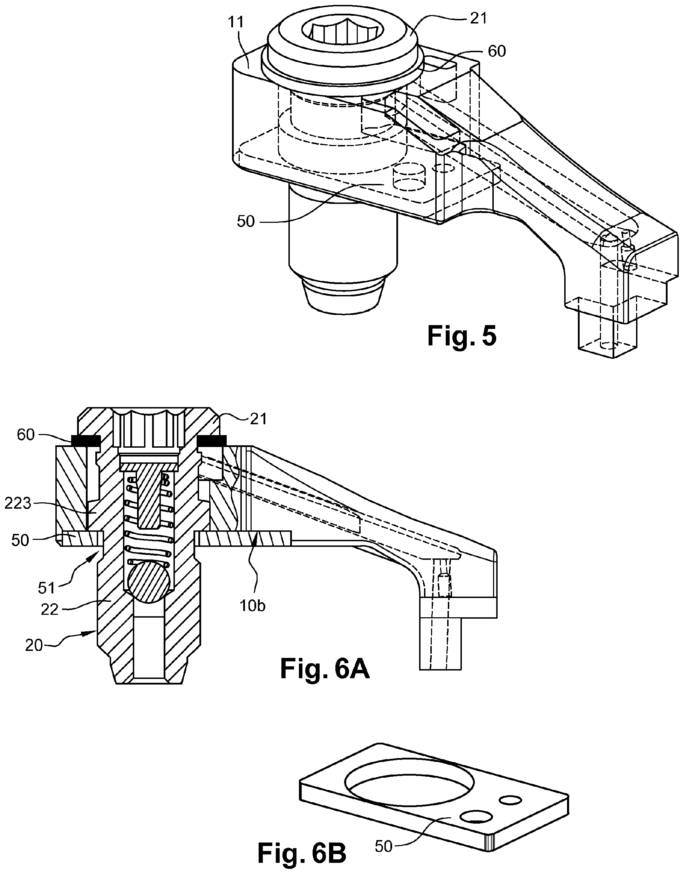

Un exemple de réalisation selon l'invention pour permettre d'améliorer la fixation de la pièce 10 est donné sur les figures 5 et 6A-6B.

Afin de limiter la pression de contact exercée par l'organe de fixation sur le dispositif d'alimentation en fluide sur lequel la pièce 10 est fixée, on peut prévoir une plaque de fixation 50 rigide ajourée disposée contre ladite face de fixation 10b dudit corps d'alimentation 11. Selon l'invention, cette plaque de fixation 50 est en un matériau présentant une rigidité supérieure à celle du matériau constitutif de la pièce 10. Selon l'invention, alternativement ou de manière additionnelle, la plaque de fixation 50 est métallique, par exemple en acier.

Dans ce cas, l'organe de fixation, en particulier la vis ou vis clapet 20, amenée à traverser un trou 51 dans la plaque 50 peut être dotée d'un épaulement 223 configuré pour venir en butée contre ladite plaque de fixation 50. L'effort de serrage est alors appliqué sur la plaque 50 plutôt que sur le dispositif d'alimentation en fluide ou le bloc moteur.

La plaque 50 rigide peut être également rajoutée à la pièce plastique 10 pour garantir une interchangeabilité du gicleur et pour permettre de fixer celui-ci sur un support métallique d'un dispositif d'alimentation en fluide.

Par exemple, une telle plaque 50 peut permettre une adaptation de la pièce plastique 10 sur un bloc moteur en un matériau ductile tel qu'un alliage d'aluminium sur lequel un gicleur métallique est d'habitude installé. Une pression de contact trop importante sur un bloc moteur en un tel matériau lors du serrage de la vis peut être à l'origine de déformations plastiques que l'on souhaite éviter sur la partie de bloc moteur en contact avec la vis. La plaque 50 rajoutée entre l'épaulement 223 de la vis 20 et le bloc moteur (non représenté) permet de répartir l'effort de serrage sur une plus grande surface, donc de réduire la pression de contact et finalement d'éviter de déformer le bloc moteur lors de l'assemblage du gicleur dans le moteur.

Outre une ouverture pour permettre le passage d'un organe de fixation, la plaque 50 peut être dotée d'au moins un trou ou d'au moins un élément protubérant tel qu'un pion pour rendre l'assemblage avec le corps d'alimentation 11 plus robuste, ce dernier pouvant être alors doté d'un pion correspondant ou d'un trou correspondant.

La plaque 50 peut être également pourvue d'au moins un trou ou d'au moins un élément protubérant tel qu'un pion pour permettre d'orienter correctement le gicleur par rapport au dispositif d'alimentation en fluide ou à un bloc moteur.

Par ailleurs, comme montré sur les figures 5 et 6A, pour améliorer l'assemblage, un joint 60, par exemple sous forme d'un disque plat ajouré, peut être prévu entre la tête 21 de la vis 20 et la face 11a d'appui du corps 11. Le joint 60 peut être par exemple un élastomère fluoro-carboné.

Lorsque le gicleur est soumis à des contraintes thermiques importantes, le joint 60 peut également permettre de compenser les différences de dilatations entre le corps 11 en matériau plastique et la vis 20 typiquement en métal. On garantit ainsi un bon positionnement de l'organe de fixation qui remplit ici en outre la fonction de canal fluidique. Le joint 60 peut également permettre d'assurer l'étanchéité. Le joint 60 rajouté sous une tête de vis 20 permet en particulier de garantir une étanchéité sur toute la plage de température d'utilisation du gicleur.

Dans l'exemple de réalisation particulier des figures 5 et 6A, l'assemblage est prévu avec la plaque 50 de fixation mais sans insert, ce qui peut permettre de diminuer le coût du gicleur. La figure 6B donne une vue de la plaque 50 isolée.

En variante, en particulier pour garantir un certain niveau de robustesse, on peut prévoir un assemblage avec à la fois la plaque de fixation 50 et de l'insert métallique 30 décrit précédemment.

Selon un exemple ne faisant pas partie de l'invention, on peut réaliser un assemblage sans plaque de fixation 50 mais avec une vis comportant un épaulement 223 tel qu'illustré sur la figure 6A.

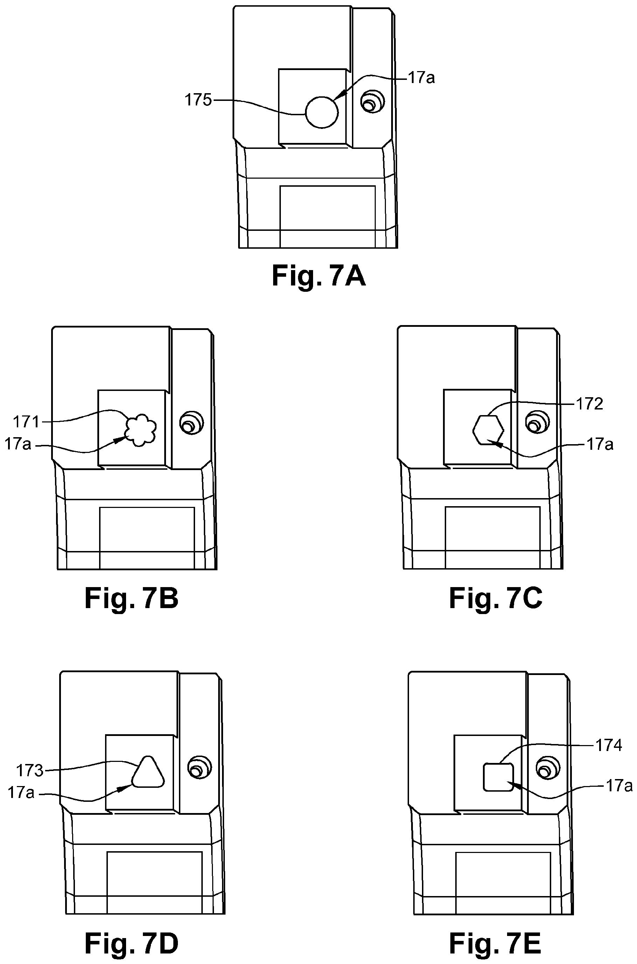

L'utilisation d'une matière plastique pour réaliser la structure de conduit décrite précédemment et pourvue d'au moins un orifice d'évacuation 17a de fluide hors du gicleur, permet également de réaliser plus aisément différentes formes d'orifices (figures 7A-7E).

Hormis un orifice à section 175 de forme circulaire illustrée sur la figure 7A, des orifices dotés de section transversale à plusieurs faces courbes ou à forme polygonale peuvent être prévus. Cette section a une incidence sur la qualité du jet recherchée et la vitesse du jet en sortie du gicleur. Elle peut être également adaptée en fonction de la quantité de fluide pendant une durée donnée, également appelée débit utile, que l'on prévoit de projeter sur une zone cible, par exemple un piston à refroidir.

Dans l'exemple de la figure 7B, la section transversale 171 de l'orifice 17a est formée d'une succession de portions courbes, par exemple circulaires, réalisant un contour fermé. Sur la figure 7C, l'orifice 17a a une section de forme polygonale 172 en particulier d'hexagone, tandis qu'une section triangulaire 173 ou rectangulaire 174, en particulier carrée, sont prévus sur les orifices d'évacuation 17a montrés respectivement sur les figures 7D et 7E. De telles formes permettant de créer des zones d'accélération du jet de fluide peuvent être prévues.

Un exemple de procédé de fabrication d'un gicleur de fluide selon l'invention va maintenant être décrit.

Lors d'une première étape, on forme la pièce 10 montrée sur les figures 2A-2B par moulage, par exemple d'un matériau plastique ou polymère. Le corps d'alimentation et la structure de conduit sont réalisés en un seul bloc et une seule opération. Une méthode de moulage par injection peut être en particulier mise en oeuvre.

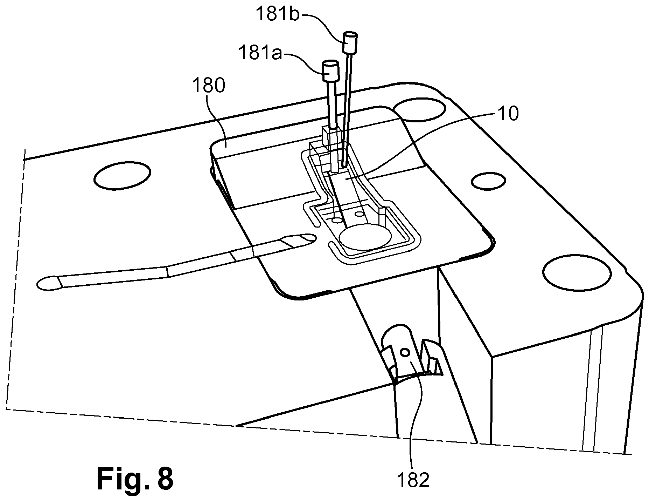

Un matériau à base d'au moins un polymère thermo-formable, par exemple tel que du PA66, ou du PA6-6T, ou du PPA, ou du PPS peut être utilisé. Ce matériau est tout d'abord ramolli par apport de chaleur puis injecté dans un moule, puis refroidi. Un moule 180 tel qu'illustré sur la figure 8 peut être par exemple utilisé.

Pour permettre la formation des orifices d'évacuation 17a, 17b de fluide l'ouverture transversale 13 et le canal 16 de la pièce 10 en une seule opération, le moule peut être notamment doté de broches 181a, 181b de forme complémentaire de celle des orifices d'évacuation 17a, 17b de fluide et d'une tige 182 de forme complémentaire de celle du canal 16 qui pénètrent dans le matériau à structurer. Le passage 12 est typiquement réalisé lors de cette même opération.

Un moulage de plusieurs matériaux polymères ou plastiques peut être avantageusement réalisé pour réaliser la pièce de gicleur.

Dans le cas d'un gicleur 10 selon l'invention, par exemple avec une plaque 50 de fixation telle qu'illustrée sur les figures 6A et 6B, la pièce 10 peut être surmoulée sur cette plaque 50 lors de l'opération de moulage. On peut ainsi réaliser un assemblage solide entre la pièce plastique 10 et une plaque de fixation en un matériau différent par exemple en acier.

Une fois la pièce 10 formée, dans un cas où un insert 60 tel qu'illustré sur les figures 4A-4B est prévu, cet insert est monté en force dans le passage 12 du corps d'alimentation.

On réalise ensuite l'assemblage du gicleur sur un dispositif d'alimentation en fluide en introduisant l'organe de fixation, typiquement une vise creuse ou une vis clapet dans le passage 12.

Comme indiqué précédemment, la pièce 10 en matériau plastique et différents assemblages décrits précédemment sont notamment prévus pour former un dispositif de refroidissement de moteur afin de projeter un fluide de refroidissement tel qu'une huile en une voire plusieurs zone(s) cible(s) d'un mécanisme de pistons d'un moteur.

Une telle pièce et de tels assemblages peuvent également trouver des applications dans d'autres types de dispositifs, par exemple dans un dispositif hydraulique ou pneumatique, de véhicule automobile, en particulier dans un circuit hydraulique de moteur à combustion interne ou par exemple pour projeter une huile lubrifiante sur une chaine ou pour un gicleur de refroidissement d'un moteur électrique pour véhicule électrique.

## Revendications

1. Elément de gicleur de fluide doté d'un corps d'alimentation (11), ledit corps d'alimentation (11) comportant une face (11b) « de fixation » et une face (11a) « d'appui » opposée à la face de fixation, ainsi qu'un passage axial (12) entre ladite face de fixation et ladite face d'appui, ledit passage axial (12) communicant avec une ouverture transversale (13) prévue dans ledit corps d'alimentation, le gicleur comportant en outre une structure de conduit (15) communicant avec ladite ouverture transversale (13), la structure de conduit étant reliée par une première extrémité audit corps d'alimentation, ladite structure de conduit s'étendant latéralement par rapport audit corps d'alimentation et comportant une extrémité libre (15.2) formant une extrémité d'évacuation munie d'un ou plusieurs orifices (17a, 17b) d'évacuation dudit fluide,
ledit corps d'alimentation et ladite structure de conduit étant formés en un bloc à base de matériau plastique ou polymère,
**caractérisé en ce que** ledit élément de gicleur de fluide comprend en outre : une plaque de fixation (50), en un matériau métallique et/ou de rigidité supérieure audit matériau plastique, ladite plaque de fixation (50) étant assemblée sur ladite face de fixation (11b) dudit corps d'alimentation (11).

2. Elément de gicleur de fluide selon la revendication 1, comprenant en outre : un insert métallique (30) logé dans ledit passage axial (12), ledit insert métallique comportant une surface externe s'appuyant contre une paroi interne (121) dudit corps d'alimentation, ledit insert métallique étant pourvu d'un trou latéral (32) traversant et communicant avec ladite ouverture transversale (13).

3. Elément de gicleur de fluide selon la revendication 2, dans lequel ledit insert métallique (30) est muni d'une structure de positionnement (31), en particulier un méplat, configuré pour venir sur un élément de positionnement dudit corps, en particulier une zone plate (121a) de la paroi interne.

4. Elément de gicleur de fluide selon l'une des revendications 1 à 3, dans lequel la structure de conduit (15) comporte un canal fluidique (16) ayant une extrémité communicant avec ladite ouverture transversale (13) et une autre extrémité communicant avec plusieurs orifices (17a, 17b) d'évacuation de fluide, lesdits orifices (17a, 17b) ayant des orientations différentes.

5. Elément de gicleur de fluide selon l'une des revendications 1 à 4, dans lequel lesdits un ou plusieurs orifices (17a, 17b) d'évacuation de fluide ont une section transversale en forme de polygone ou une section en forme d'une succession de portions courbes réalisant un contour fermé.

6. Assemblage pour gicleur de fluide comprenant :
- un élément de gicleur de fluide selon l'une des revendications 1 à 5,
- au moins un organe de fixation (20) pour fixer ledit corps d'alimentation (11) dudit gicleur à un dispositif d'alimentation en fluide.

7. Gicleur de fluide comprenant :
- un élément de gicleur de fluide selon l'une des revendications 1 à 5,
- un élément (25) de régulation d'accès de fluide dans ladite structure de conduit (15).

8. Gicleur de fluide comprenant :
- un élément de gicleur de fluide selon l'une des revendications 1 à 5,
- une vis clapet (20) logée dans ledit passage axial (12).

9. Gicleur de fluide selon la revendication 8, ladite vis clapet (20) étant dotée d'un épaulement (223) configuré pour venir en butée contre une plaque de fixation (50) en un matériau métallique et/ou de rigidité supérieure audit matériau plastique, ladite plaque de fixation (50) étant assemblée sur ladite face de fixation (11b) dudit corps d'alimentation (11).

10. Gicleur de fluide selon l'une des revendications 8 ou 9, comprenant en outre : un joint (60) intercalé entre une tête (21) de ladite vis clapet (20) et ladite face d'appui (11a) dudit corps d'alimentation (11).

11. Dispositif de refroidissement de piston d'un moteur à combustion interne comprenant un gicleur de fluide selon l'une des revendications 7 à 10.

12. Moteur à combustion interne comportant :
- un bloc moteur et des pistons montés coulissants dans ledit bloc moteur,
- un dispositif de refroidissement selon la revendication 11.

13. Procédé de fabrication d'un élément de gicleur de fluide selon l'une des revendications 1 à 5, comprenant une étape de moulage, en particulier de moulage par injection dudit bloc de matériau plastique, le moulage étant réalisé de manière à surmouler ledit bloc plastique sur ladite plaque (50) en contact avec ladite face « de fixation ».

14. Procédé selon la revendication 13, dans lequel la structure de conduit comporte un canal (16) et des orifices d'évacuation (17a, 17b) effectués concomitamment lors du moulage, à l'aide d'un dispositif de moulage comprenant un moule (180), une tige (182), et une ou plusieurs broche (181a, 181b).

## Patentansprüche

1. Fluiddüsenelement, das mit einem Versorgungskörper (11) ausgestattet ist, wobei der Versorgungskörper (11) eine "Befestigungsfläche" (11b) und eine der Befestigungsfläche gegenüberliegende "Anlagefläche" (11a) sowie einen axialen Durchgang (12) zwischen der Befestigungsfläche und der Anlagefläche umfasst, wobei der axiale Durchgang (12) mit einer im Versorgungskörper vorgesehenen Queröffnung (13) in Verbindung steht, wobei die Düse ferner eine Leitungsstruktur (15) umfasst, die mit der Queröffnung (13) in Verbindung steht, wobei die Leitungsstruktur über ein erstes Ende mit dem Versorgungskörper verbunden ist, wobei sich die Leitungsstruktur seitlich im Verhältnis zum Versorgungskörper erstreckt und ein freies Ende (15.2) umfasst, das eine Auslassende bildet, das mit einer oder mehreren Auslassöffnungen (17a, 17b) für das Fluid versehen ist,
wobei der Versorgungskörper und die Leitungsstruktur in einem Block auf der Basis von Kunststoff- oder Polymermaterial ausgebildet sind,
**dadurch gekennzeichnet, dass** das Fluiddüsenelement ferner Folgendes umfasst: eine Befestigungsplatte (50) aus einem metallischen Material und/oder mit einer Steifigkeit, die höher als die Steifigkeit des Kunststoffmaterials ist, wobei die Befestigungsplatte (50) an der Befestigungsfläche (11b) des Versorgungskörpers (11) montiert ist.

2. Fluiddüsenelement nach Anspruch 1, das ferner Folgendes umfasst: einen Metalleinsatz (30), der im axialen Durchgang (12) untergebracht ist, wobei der Metalleinsatz eine Außenfläche umfasst, die an einer Innenwand (121) des Versorgungskörpers anliegt, wobei der Metalleinsatz mit einem Seitenloch (32) versehen ist, das durch die Queröffnung (13) verläuft und mit dieser in Verbindung steht.

3. Fluiddüsenelement nach Anspruch 2, wobei der Metalleinsatz (30) mit einer Positionierungsstruktur (31), insbesondere mit einer Abflachung, versehen ist, die dazu konfiguriert ist, auf ein Positionierungselement des Körpers, insbesondere einen flachen Bereich (121a) der Innenwand, zu kommen.

4. Fluiddüsenelement nach einem der Ansprüche 1 bis 3, wobei die Leitungsstruktur (15) einen Fluidkanal (16) umfasst, der ein Ende, das mit der Queröffnung (13) in Verbindung steht, und ein anderes Ende aufweist, das mit den mehreren Auslassöffnungen (17a, 17b) für das Fluid in Verbindung steht, wobei die Öffnungen (17a, 17b) unterschiedliche Ausrichtungen aufweisen.

5. Fluiddüsenelement nach einem der Ansprüche 1 bis 4, wobei die eine oder mehreren Auslassöffnungen (17a, 17b) für das Fluid einen polygonalen Querschnitt oder einen Querschnitt in Form einer Folge von gekrümmten Abschnitten, die eine geschlossene Kontur ergeben, aufweisen.

6. Baugruppe für eine Fluiddüse, die Folgendes umfasst:
- ein Fluiddüsenelement nach einem der Ansprüche 1 bis 5,
- mindestens ein Befestigungselement (20) zum Befestigen des Versorgungskörpers (11) der Düse an einer Fluidversorgungsvorrichtung.

7. Fluiddüse, die Folgendes umfasst:
- ein Fluiddüsenelement nach einem der Ansprüche 1 bis 5,
- ein Regulierungselement (25) für den Fluidzugang in der Leitungsstruktur (15).

8. Fluiddüse, die Folgendes umfasst:
- ein Fluiddüsenelement nach einem der Ansprüche 1 bis 5,
- eine Klappenschraube (20), die im axialen Durchgang (12) untergebracht ist.

9. Fluiddüse nach Anspruch 8, wobei die Klappenschraube (20) mit einer Schulter (223) ausgestattet ist, die dazu konfiguriert ist, an einer Befestigungsplatte (50) aus einem metallischen Material und/oder mit einer Steifigkeit, die höher als die Steifigkeit des Kunststoffmaterials ist, zum Anliegen zu kommen, wobei die Befestigungsplatte (50) auf der Befestigungsfläche (11b) des Versorgungskörpers (11) montiert ist.

10. Fluiddüse nach einem der Ansprüche 8 oder 9, die ferner Folgendes umfasst:
eine Dichtung (60), die zwischen einem Kopf (21) der Klappenschraube (20) und der Anlagefläche (11a) des Versorgungskörpers (11) eingefügt ist.

11. Kolbenkühlvorrichtung eines Verbrennungsmotors, umfassend eine Fluiddüse nach einem der Ansprüche 7 bis 10.

12. Verbrennungsmotor, der Folgendes umfasst:
- einen Motorblock und Kolben, die im Motorblock verschiebbar angebracht sind,
- eine Kühlvorrichtung nach Anspruch 11.

13. Herstellungsverfahren für ein Fluiddüsenelement nach einem der Ansprüche 1 bis 5, umfassend einen Schritt des Gießens, insbesondere des Spritzgießens des Blocks aus Kunststoffmaterial, wobei das Gießen derart durchgeführt wird, dass der Kunststoffblock auf die Platte (50) gegossen wird, die in Kontakt mit der "Befestigungsfläche" steht.

14. Verfahren nach Anspruch 13, wobei die Leitungsstruktur einen Kanal (16) und Auslassöffnungen (17a, 17b) umfasst, die beim Gießen mit einer Gießvorrichtung, die eine Form (180), einen Schaft (182) und eine oder mehrere Stangen (181a, 181b) umfasst, gleichzeitig hergestellt werden.

## Claims

1. A fluid nozzle element with a supply body (11), said supply body (11) including an "attachment" face (11b) and a "bearing" face (11a) opposite to the attachment face, as well as an axial passageway (12) between said attachment face and said bearing face, said axial passageway (12) communicating with a transverse opening (13) provided in said supply body, the nozzle further including a conduit structure (15) communicating with said transverse opening (13), the conduit structure being connected by a first end to said supply body, said conduit structure extending laterally relative to said supply body and including a free end (15. 2) forming a discharge end fitted with one or more discharge ports (17a, 17b) for discharging said fluid,
said supply body and said conduit structure being formed of a block of a plastic or polymer material,
**characterized in that** the fluid nozzle element further comprises: an attachment plate (50), made of a metal material and/or of a material with greater rigidity than said plastic material, said attachment plate (50) being assembled to said attachment face (11b) of said supply body (11).

2. The fluid nozzle element according to claim 1 further comprising: a metal insert (30) housed in said axial passageway (12), said metal insert including an outer surface bearing against an inner wall (121) of said supply body, said metal insert being provided with a side hole (32) passing through and communicating with said transverse opening (13).

3. The fluid nozzle element according to claim 2, wherein said metal insert (30) is fitted with a positioning structure (31), in particular a flat, configured to be placed on a positioning element of said body, in particular a flat zone (121a) of the inner wall.

4. The fluid nozzle element according to one of claims 1 to 3, wherein the conduit structure (15) includes a fluid channel (16) having one end communicating with said transverse opening (13) and another end communicating with several fluid discharge ports (17a, 17b), said ports (17a, 17b) having different orientations.

5. The fluid nozzle element according to one of claims 1 to 4, wherein said one or more fluid discharge ports (17a, 17b) have a polygonal transverse cross-section or a cross-section in the form of a succession of curved portions providing a closed contour.

6. A fluid nozzle assembly comprising:
- a fluid nozzle element according to one of claims 1 to 5,
- at least one attachment member (20) for attaching said supply body (11) of said nozzle to a fluid supply device.

7. A fluid nozzle comprising:
- a fluid nozzle element according to one of claims 1 to 5,
- a regulation element (25) for regulating fluid access into said conduit structure (15).

8. The fluid nozzle comprising:
- a fluid nozzle element according to one of claims 1 to 5,
- a flap screw (20) housed in said axial passageway (12).

9. The fluid nozzle according to claim 8, said flap screw (20) being provided with a shoulder (223) configured to abut against an attachment plate (50) made of a metal material and/or of greater rigidity than said plastic material, said attachment plate (50) being assembled to said attachment face (11b) of said supply body (11).

10. The fluid nozzle according to one of claims 8 or 9, further comprising:
a seal (60) interposed between a head (21) of said flap screw (20) and said bearing face (11a) of said supply body (11).

11. A piston cooling device of an internal combustion engine comprising a fluid nozzle according to one of claims 7 to 10.

12. An internal combustion engine including:
- an engine block and pistons slidably mounted in said engine block,
- a cooling device according to claim 11.

13. Method for manufacturing a fluid nozzle element according to one of claims 1 to 5, comprising a step of moulding, in particular injection moulding, said plastic material block, said moulding being performed so as to overmould said plastic block onto a metal plate (50) in contact with said "attachment" face.

14. Method according to claim 13, wherein the conduit structure comprises a channel (16) and discharge ports (17a, 17b) made concomitantly during moulding, using a moulding device comprising a mould (180), a shank (182), and one or more shafts (181a, 181b).
